# FASCICULE DE BREVET EUROPEEN

(11) **EP 2 944 035 B1**
(45) Date de publication et mention de la délivrance du brevet: **22.05.2019**
(21) Numéro de dépôt: 14703123.1
(22) Date de dépôt: 09.01.2014
(51) Int. Cl.: H04B 10/272, H04B 10/50, H04B 10/60, H04J 14/02, H01S 5/14

(54) **PROCÉDÉ ET DISPOSITIF RÉFLÉCHISSANT POUR RÉALISER LA FONCTION RÉCEPTRICE D'UN RÉSEAU D'ACCÈS OPTIQUE UTILISANT UN MULTIPLEXAGE EN LONGUEUR D'ONDE**
REFLEXIONSVERFAHREN UND -VORRICHTUNG ZUR AUSFÜHRUNG EINER EMPFANGSFUNKTION EINES OPTISCHEN ZUGANGSNETZES MIT WELLENLÄNGENMULTIPLEXIERUNG
REFLECTING METHOD AND DEVICE FOR PERFORMING THE RECEIVING FUNCTION OF AN OPTICAL ACCESS NETWORK USING WAVELENGTH DIVISION MULTIPLEXING

(30) Priorité: 10.01.2013 FR 1350227
(43) Date de publication de la demande: 18.11.2015
(73) Titulaire: Orange, 75015 Paris (FR)
(72) Inventeur: CHANCLOU, Philippe, F-22300 Lannion (FR); SALIOU, Fabienne, F-22300 Lannion (FR); DENIEL, Qian, 22300 Ploubezre (FR)
(86) Numéro de dépôt international: PCT/FR2014/050035
(87) Numéro de publication internationale: WO 2014/108642

(56) Documents cités:
- WO-A1-2011/018054
- US-A1- 2003 072 523
- US-A1- 2011 200 333
- US-A1- 2012 093 515
- QIAN DENIEL ET AL: "Up to 10 Gbit/s transmission in WDM-PON architecture using external cavity laser based on self-tuning ONU", OPTICAL FIBER COMMUNICATION CONFERENCE AND EXPOSITION (OFC/NFOEC), 2012 AND THE NATIONAL FIBER OPTIC ENGINEERS CONFERENCE, IEEE, 4 mars 2012 (2012-03-04), pages 1-3, XP032340238, ISBN: 978-1-4673-0262-3
- SUGIE T ET AL: "Wavelength channel data rewrite using saturated SOA modulator for WDM networks with centralized light sources", JOURNAL OF LIGHTWAVE TECHNOLOGY, IEEE SERVICE CENTER, NEW YORK, NY, US, vol. 21, no. 11, 1 November 2003 (2003-11-01), pages 2546-2556, XP011103873, ISSN: 0733-8724, DOI: 10.1109/JLT.2003.819532

## Description

### 1. Domaine de l'invention

La demande d'invention se situe dans le domaine des réseaux optiques passifs (ou PON, pour passive optical networks, en anglais) desservant des abonnés à des services de communications électroniques, et plus particulièrement dans celui des réseaux optiques passifs à multiplexage de longueur d'onde.

### 2. Etat de la technique antérieure

Les architectures de réseaux d'accès optique utilisent typiquement une longueur d'onde différente par sens de transmission, les différents utilisateurs d'un réseau se partageant des fenêtres temporelles du signal. Cette technique appelée TDM (Time Division Multiplexing en anglais) montre des limites en termes de débits maximum.

Une autre technique permettant des débits de transmission supérieurs, étudiée au sein d'organismes de normalisation tels que le groupe SG15 de l'UIT (Union Internationale des Télécommunications), ou le groupe 802.3 de l'IEEE (International Electrical and Electronical Engineer association, en anglais), consiste à associer une longueur d'onde à chaque utilisateur du réseau. Cette technique est appelée WDM (Wavelength Division Multiplexing, en anglais).

Une façon d'associer les longueurs d'onde aux utilisateurs est divulguée par la demande de brevet WO 2011/110126 intitulée "Self-injection optical transmitting and receiving module and wavelength division multiplexing passive optical network system", ou "système de réseau optique passif WDM et module de transmission et de réception optique à auto-injection". Cette technique, aussi appelée "à auto-accordage", ou en anglais "self-seeded", consiste à laisser le système s'auto-organiser en se stabilisant sur une longueur d'onde unique par le biais d'allers-retours successifs de la lumière dans ce qui est appelé la "cavité laser", c'est-à-dire le milieu optique entre la source du signal optique et le point de réflexion, la longueur d'onde et sa puissance étant fonction du parcours et de son gain optique, qui sont uniques.

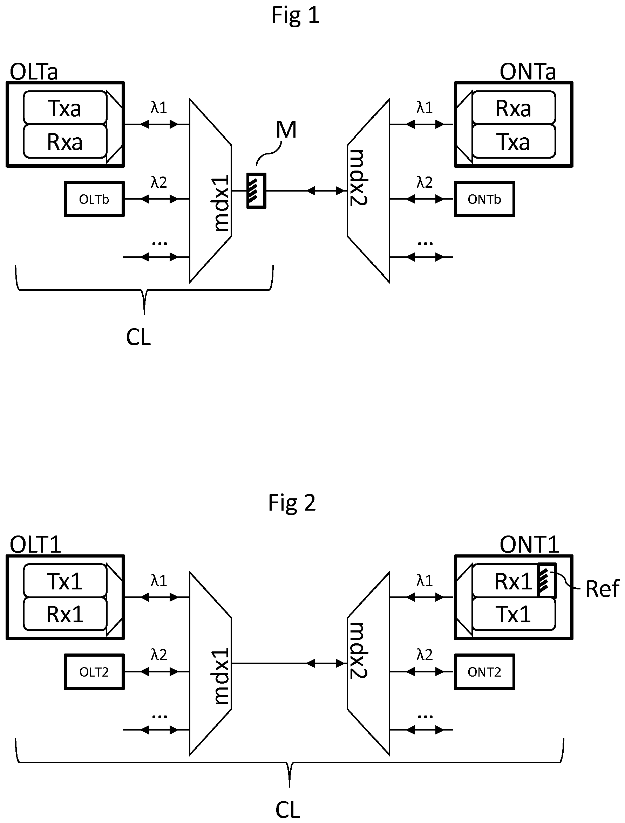

Un PON WDM à auto-accordage selon la technique antérieure est présenté par la figure 1.

Cette solution introduit dans le PON, en sus des multiplexeur/démultiplexeur en longueur d'onde mdx1 et mdx2, un dispositif optique réflectif M permettant à une partie du signal optique de revenir à la source OLTa, une autre partie continuant au-delà pour atteindre sa destination ONTa. La source optique OLTa et le composant optique réflectif, ou miroir M, doivent être disposés de part et d'autre du multiplexeur/démultiplexeur mdx1 en longueur d'onde, car c'est lui qui détermine la longueur d'onde λ1 pour chaque couple émetteur/récepteur Txa/Rxa. De même, d'autres longueurs d'onde sont déterminées pour les autres couples émetteur/récepteur du PON, tel que par exemple λ2 pour l'émetteur dans la source optique OLTb et le récepteur dans ONTb.

Typiquement la source optique comprend un composant appelé RSOA, pour "reflective semi-conductor optical amplifier", ou amplificateur optique réflectif à semi-conducteur, ou un composant appelé SOA, pour "semi-conductor optical amplifier", associé à un module réflectif. Même si un seul aller-retour du signal optique suffit pour accorder la longueur d'onde, plusieurs sont nécessaires afin de stabiliser les autres caractéristiques du régime optique, telles que la puissance optique, ce qui explique le rôle du composant ou module réflectif dans la source optique.

Un problème est que le miroir M est un élément faisant subir au signal une perte optique à l'arrivée dans le dispositif de destination ONTa. Une façon de compenser cette perte est d'associer à la réflexion une amplification du signal dans le miroir M, mais cela nécessite un montage optique actif, c'est-à-dire alimenté en courant électrique, ce qui pose également problème car le multiplexeur/démultiplexeur mdx1 que la cavité laser CL doit inclure fait partie d'une infrastructure PON par définition passive. Selon la technique antérieure, le miroir M amplifié est donc placé du côté où il est plus aisé de l'alimenter, c'est-à-dire du côté du central de l'opérateur abritant OLTa, le plus proche possible. Cela impose des contraintes encore plus grandes dans l'autre sens, quand la source du signal optique est dans ONTa. Dans ce cas un dispositif réflectif similaire devra être placé de l'autre côté de mdx2 par rapport à ONTa, c'est-à-dire proche de mdx1 puisque c'est là qu'il est plus facile d'alimenter le dispositif. Ceci créée une cavité laser pour la source ONTa qui court le risque d'être trop longue pour pouvoir servir à l'auto-accordage en longueur d'onde, en raison des pertes optiques proportionnelles à la longueur du chemin parcouru par la lumière.

Un autre problème est que l'ajout du miroir M entre les mdx1 et mdx2 rend le PON WDM tout entier dédié à la technique self-seeded, et qu'il n'est plus possible de mixer des couples émetteur/récepteur OLTa/ONTa selon une autre technologie sur le même PON.

Un des buts de l'invention est de remédier à des inconvénients de l'état de la technique.

### 3. Exposé de l'invention

L'invention vient améliorer la situation à l'aide d'un dispositif récepteur pour un système de transmission optique à auto-accordage en longueur d'onde, apte à recevoir un signal optique émis par un dispositif émetteur du même système comprenant une source lumineuse pour émettre le signal optique, le signal optique étant transmis par un réseau optique WDM PON ou point à point, une longueur d'onde du signal optique étant accordée au moyen d'un aller-retour du signal optique entre le dispositif émetteur et un réflecteur optique, le dispositif récepteur comprenant:
- un amplificateur optique pour amplifier le signal optique reçu du dispositif émetteur au travers du réseau optique WDM ou point à point ;
- un détecteur optique apte à détecter des données dans le signal optique amplifié par ledit amplificateur optique ;
- le réflecteur optique configuré pour renvoyer le signal optique amplifié par ledit amplificateur optique vers le dispositif émetteur au travers du réseau optique WDM ou point à point, pour l'accordage en longueur d'onde du signal optique.

Selon l'invention, le miroir utilisé pour l'accordage en longueur d'onde se trouve dans le dispositif récepteur. Le signal optique arrivant dans le dispositif récepteur n'a donc pas subi les pertes optiques dues au miroir partiel, que la technique antérieure plaçait dans le trajet entre émetteur et récepteur.

Cette disposition va à l'encontre d'un préjugé de l'homme de métier qui aurait évité de placer le miroir si loin de la source. Afin de compenser les possibles pertes optiques occasionnées par le surplus de trajet parcouru par la lumière, l'invention remplace le coupleur utilisé selon la technique antérieure pour la détection des données, placé dans la cavité laser en amont de l'amplificateur optique, par un détecteur optique situé non plus dans la cavité laser, mais en aval de l'amplificateur optique, selon un agencement composé de l'amplificateur optique et du réflecteur optique du dispositif récepteur. Précisons ici que le détecteur de signal optique peut indifféremment être intégré sur l'amplificateur optique ou sur le réflecteur optique, ou être intercalé entre les deux.

Grâce à cet agencement optique, le signal optique n'a plus besoin d'être prélevé dans la cavité laser pour être converti, ce qui occasionne moins de pertes optiques pour l'accordage en longueur d'onde.

La portée du signal entre le dispositif émetteur et le dispositif récepteur peut ainsi être augmentée tout en préservant la capacité d'auto-accordage en longueur d'onde. De cette manière, il est possible de disposer le miroir dans le dispositif récepteur, ce qui présente d'autres avantages qui vont être présenté dans la suite.

Selon un aspect de l'invention, le détecteur optique est intégré à l'amplificateur optique.

Grâce à cet aspect, le dispositif récepteur ne nécessite plus de photo-détecteur tel qu'une diode. L'amplificateur convertit les photons qui le traversent en photo-courant qui est mesuré directement aux bornes de l'amplificateur, puis traité comme signal de données. La réalisation du dispositif récepteur s'en trouve simplifiée.

Selon un aspect de l'invention, le détecteur optique est intégré au réflecteur optique.

Grâce à cet aspect, il est possible d'intégrer un composant courant tel qu'une diode derrière un miroir partiel, c'est-à-dire laissant passer une partie de la lumière.

Le réflecteur optique peut être par exemple un miroir de Faraday partiel, ou tout autre miroir partiel. La partie du signal optique passant à travers le miroir créée un photo-courant dans la diode qui est par la suite traité comme signal de données. Lorsqu'un miroir de Faraday est utilisé, l'amplification, qui peut être réalisé à l'aide d'un amplificateur optique à semi-conducteur SOA qui possède un gain fortement dépendant à la polarisation, est possible selon un seul axe de polarisation pour l'ensemble des états de polarisation du signal optique incident. Un axe de polarisation unique a pour avantage qu'en un point donné de la cavité laser, le signal optique après un aller-retour revient dans le même état de polarisation que son état initial, et le signal subit les mêmes effets de parcours au retour qu'à l'aller.

Selon un aspect de l'invention, le réflecteur optique comprend un séparateur de polarisation et un rotateur de polarisation à 180°, et le signal optique reçu est séparé selon des axes de polarisation pour former un premier signal séparé et un deuxième signal séparé, le rotateur de polarisation et l'amplificateur optique étant disposés pour former une boucle avec le séparateur de polarisation, le premier signal séparé circulant dans un sens et le deuxième signal séparé circulant dans l'autre sens, les deux signaux séparés étant réunis dans le séparateur de polarisation pour former un signal optique amplifié renvoyé vers le dispositif émetteur.

Grâce à cet aspect, le dispositif réalise une amplification selon un seul axe, de l'ensemble des états de polarisation du signal optique incident. Ceci permet l'utilisation d'un amplificateur optique à semi-conducteur SOA, qui est un composant courant, et qui a l'avantage de présenter un gain optique d'autant plus élevé qu'il est fortement dépendant à la polarisation.

Selon un autre aspect de l'invention, la boucle comprend un coupleur disposé entre l'amplificateur et le rotateur afin de prélever une partie de la lumière pour la diriger vers le détecteur optique.

Les différents aspects du dispositif qui viennent d'être décrits peuvent être mis en oeuvre indépendamment les uns des autres ou en combinaison les un avec les autres.

L'invention concerne aussi un terminal optique comprenant un dispositif récepteur tel que celui qui vient d'être décrit et un dispositif émetteur comprenant une source lumineuse pour émettre un signal optique.

Ce terminal optique est par exemple un ONT s'il est situé chez le client, ou un OLT s'il est situé dans le central de l'opérateur. Les ONT comme les OLT possèdent les deux fonctions de transmission et de réception de signaux optiques.

L'invention concerne aussi un système de transmission optique comprenant un dispositif émetteur comprenant une source lumineuse pour émettre un signal optique, un réseau optique WDM PON ou point à point transmettant le signal optique, le système comprenant en outre un dispositif récepteur tel que celui qui vient d'être décrit, recevant le signal optique.

Lorsque par exemple le dispositif émetteur est dans un OLT, et le dispositif récepteur un ONT, en combinant à un PON WDM ce couple OLT-ONT, on obtient une solution pour la mise en oeuvre de l'auto-accordage de longueur d'onde, sans l'inconvénient des pertes optiques causées par un miroir situé dans l'infrastructure du PON avant l'arrivée du signal dans l'ONT. Aussi, comme le miroir n'est plus situé dans l'infrastructure passive du PON, il n'est plus obligatoire de dédier le PON tout entier à cette technologie self-seeded. Les couples OLT-ONT ne mettant pas en oeuvre le dispositif récepteur selon l'invention peuvent continuer d'utiliser la technologie d'accordage de longueur d'onde initialement prévue pour le PON. De plus, le problème de l'alimentation de l'amplificateur est résolu puisqu'il se trouve dans l'ONT, qui est lui-même alimenté, et non plus dans l'infrastructure passive.

L'invention concerne également un système de transmission optique comprenant un réseau optique WDM PON ou point à point transmettant un signal optique, le système comprenant en outre deux terminaux optiques tels que celui qui vient d'être décrit, le premier émettant le signal optique, le deuxième recevant le signal optique.

De cette manière, il est possible de faire bénéficier un même couple de terminaux OLT-ONT d'un système de transmission self-seeded selon l'invention, à la fois dans le sens descendant et dans le sens remontant. Cette symétrie présente une simplicité avantageuse qui facilite les processus industriels de fabrication des terminaux optiques.

L'invention concerne enfin un procédé de réception d'un signal optique pour un système de transmission optique à auto-accordage en longueur d'onde, le signal optique étant émis par un dispositif émetteur du système comprenant une source lumineuse pour émettre le signal optique, un réseau optique WDM PON ou point à point transmettant le signal optique, une longueur d'onde du signal optique étant accordée au moyen d'un aller-retour du signal optique entre le dispositif émetteur et un réflecteur optique, le procédé comprenant les étapes suivantes :
- réception du signal optique émis par le dispositif émetteur au travers du réseau optique WDM ou point à point ;
- amplification du signal optique reçu, formant un signal optique amplifié ;
- détection de données dans le signal optique amplifié ;
- réflexion du signal optique amplifié vers le dispositif émetteur au travers du réseau optique WDM ou point à point, pour l'accordage en longueur d'onde du signal optique.

Ce procédé est mise en oeuvre par le dispositif récepteur selon l'invention.

### 4. Présentation des figures

D'autre avantages et caractéristiques de l'invention apparaitront plus clairement à la lecture de la description suivante de modes de réalisation particuliers de l'invention, donnés à titre de simple exemple illustratif et non limitatif, et des dessins annexés, parmi lesquels :
- la figure 1 présente un système de transmission optique PON WDM à auto-accordage selon la technique antérieure,
- la figure 2 présente un système de transmission optique PON WDM à auto-accordage, selon un mode particulier de réalisation de l'invention,
- la figure 3 présente le dispositif récepteur selon un premier mode de réalisation de l'invention,
- la figure 4 présente le procédé de réception d'un signal optique mettant en oeuvre le dispositif récepteur selon le premier mode de réalisation de l'invention,
- la figure 5 présente le dispositif récepteur selon un deuxième mode de réalisation de l'invention,
- la figure 6 présente le procédé de réception d'un signal optique mettant en oeuvre le dispositif récepteur selon le deuxième mode de réalisation de l'invention,
- la figure 7 présente le dispositif récepteur selon un troisième mode de réalisation de l'invention,
- la figure 8 présente le procédé de réception d'un signal optique mettant en oeuvre le dispositif récepteur selon le troisième mode de réalisation de l'invention,
- la figure 9 présente le dispositif récepteur selon un quatrième mode de réalisation de l'invention,
- la figure 10 présente le procédé de réception d'un signal optique mettant en oeuvre le dispositif récepteur selon le quatrième mode de réalisation de l'invention.

### 5. Description détaillée d'au moins un mode de réalisation de l'invention

Dans la suite de la description, on présente plusieurs modes de réalisation de l'invention dans le cas de réseaux optiques passifs (PON) à multiplexage de longueur d'onde (WDM), mais l'invention s'applique également à des réseaux point-à-point.

La **figure 2** présente un système de transmission optique PON WDM à auto-accordage, selon un mode particulier de réalisation de l'invention.

Dans ce mode particulier de réalisation de l'invention, un miroir Ref est placé dans le dispositif récepteur Rx1 du terminal optique ONT1. En comparaison avec le système selon la technique antérieure décrit en référence à la figure 1, il n'y a plus de miroir M dans le PON entre les multiplexeur/démultiplexeur mdx1 et mdx2. Ainsi, aucune modification n'est à apporter dans l'infrastructure passive du PON WDM pour qu'il soit "self seeded". De plus, il est possible de mettre en oeuvre l'invention pour certains couples émetteur/récepteur et de ne pas le faire pour d'autres. Il n'est pas nécessaire d'équiper le dispositif récepteur du terminal optique ONT2 par exemple.

Dans une variante, un deuxième miroir Ref peut aussi être placé dans le dispositif récepteur Rx1 du terminal optique OLT1, afin d'obtenir un PON WDM "self seeded" dans les deux sens.

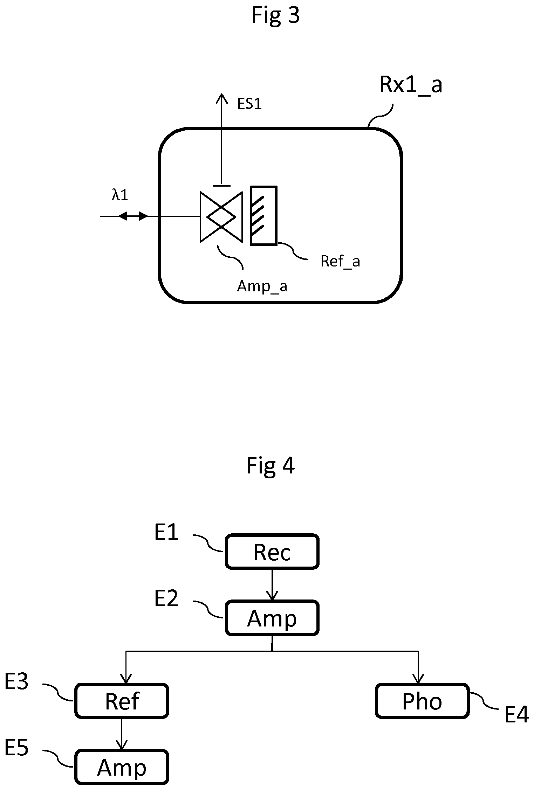

La **figure 3** présente le dispositif récepteur selon un premier mode de réalisation de l'invention.

Dans ce mode de réalisation le dispositif Rx1_a comprend un amplificateur optique Amp_a et un réflecteur optique Ref_a, amplifiant et réfléchissant l'ensemble des états de polarisation de la lumière incidente. Le dispositif Rx1_a peut être réalisé soit à l'aide d'un RSOA intégrant à la fois Amp_a et Ref_a, soit à l'aide d'un SOA et d'un miroir de Faraday pour mettre en oeuvre respectivement Amp_a et Ref_a. Le SOA, comme le RSOA peuvent avantageusement émettre selon un seul axe de polarisation pour plus d'efficacité en termes de puissance optique.

Le signal optique est photo-détecté directement aux bornes de l'amplificateur optique Amp_a. La mesure du courant électrique généré par les photons donne le signal électrique ES1 qui peut ensuite être démodulé en un signal de données.

La **figure 4** présente les étapes du procédé de réception d'un signal optique mettant en oeuvre le dispositif récepteur selon le premier mode de réalisation de l'invention.

Lors d'une étape E1, le dispositif récepteur Rx1_a reçoit du PON WDM le signal optique, représenté ici par sa longueur d'onde λ1, émis par l'émetteur Tx1 d'un terminal optique distant tel que OLT1 par exemple.

Lors d'une étape E2, le signal optique reçu est amplifié par l'amplificateur optique Amp_a.

Lors d'une étape E3, le signal optique amplifié est réfléchi par le réflecteur optique Ref_a.

Lors d'une étape E4, le signal optique amplifié est photo-détecté aux bornes de l'amplificateur optique Amp_a, afin de générer le signal électrique ES1.

Lors d'une étape E5, le signal optique réfléchi repasse à travers l'amplificateur optique Amp_a, avant d'être réémis vers le PON WDM.

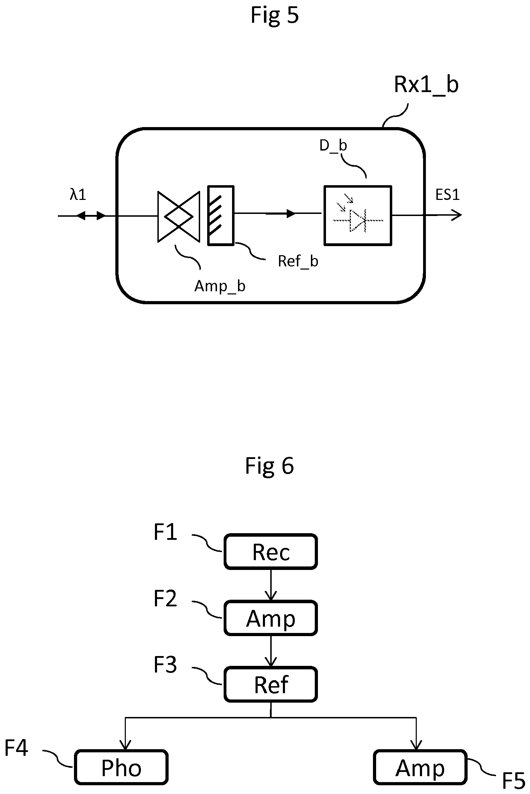

La **figure 5** présente le dispositif récepteur selon un deuxième mode de réalisation de l'invention.

Dans ce mode de réalisation le dispositif Rx1_b comprend un amplificateur optique Amp_b et un réflecteur optique partiel Ref_b, amplifiant et réfléchissant l'ensemble des états de polarisation de la lumière incidente. Le dispositif Rx1_b peut être réalisé soit à l'aide d'un RSOA à réflecteur partiel intégrant à la fois Amp_b et Ref_b, soit à l'aide d'un SOA et d'un miroir de Faraday partiel pour mettre en oeuvre respectivement Amp_b et Ref_b. Le SOA, comme le RSOA peuvent avantageusement émettre selon un seul axe de polarisation pour plus d'efficacité en termes de puissance optique.

Le signal optique passant à travers le miroir partiel Ref_b sans être reflété est photo-détecté par une diode D_b agencée derrière Ref_b. La diode D_b génère le signal électrique ES1 qui peut ensuite être démodulé en un signal de données.

La **figure 6** présente les étapes du procédé de réception d'un signal optique mettant en oeuvre le dispositif récepteur selon le deuxième mode de réalisation de l'invention.

Lors d'une étape F1, le dispositif récepteur Rx1_b reçoit du PON WDM le signal optique, représenté ici par sa longueur d'onde λ1, émis par l'émetteur Tx1 d'un terminal optique distant tel que OLT1 par exemple.

Lors d'une étape F2, le signal optique reçu est amplifié par l'amplificateur optique Amp_b.

Lors d'une étape F3, le signal optique amplifié est réfléchi par le réflecteur optique Ref_b.

Lors d'une étape F4, le signal optique amplifié et filtré par le réflecteur optique partiel Ref_b est photo-détecté par une diode D_b, afin de générer le signal électrique ES1.

Lors d'une étape F5, le signal optique réfléchi repasse à travers l'amplificateur optique Amp_b, avant d'être réémis vers le PON WDM.

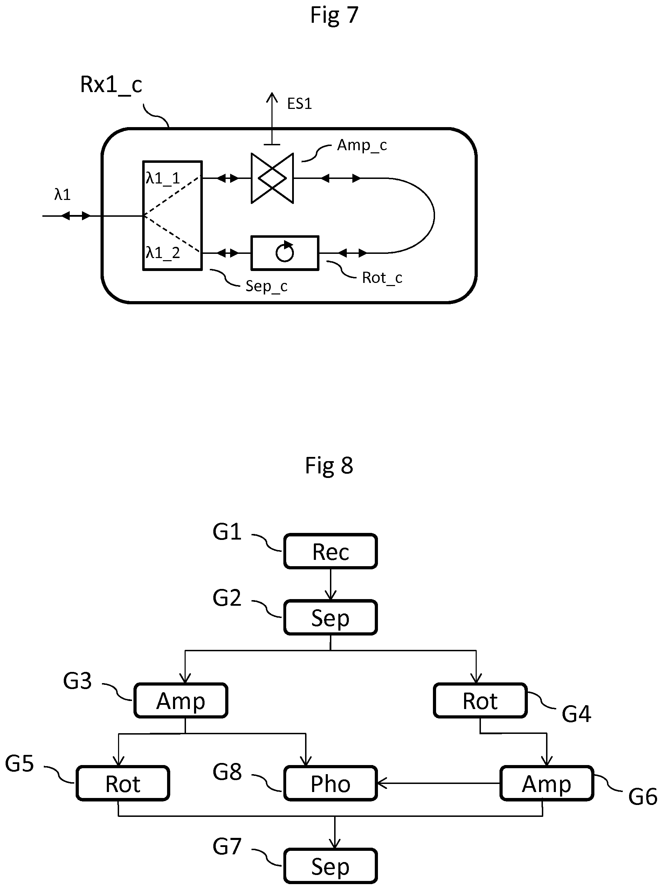

La **figure 7** présente le dispositif récepteur selon un troisième mode de réalisation de l'invention.

Dans ce mode de réalisation le dispositif Rx1_c comprend un amplificateur optique Amp_c, un séparateur de polarisation Sep_c et un rotateur de polarisation à 180° Rot_c, formant une boucle optique bi-directiomelle. L'amplificateur optique Amp_c peut être réalisé à l'aide d'un SOA. Le SOA peut avantageusement émettre selon un seul axe de polarisation pour plus d'efficacité en termes de puissance optique.

Le signal optique est photo-détecté directement aux bornes de l'amplificateur optique Amp_c. La mesure du courant électrique généré par les photons donne le signal électrique ES1 qui peut ensuite être démodulé en un signal de données.

La **figure 8** présente les étapes du procédé de réception d'un signal optique mettant en oeuvre le dispositif récepteur selon le troisième mode de réalisation de l'invention.

Lors d'une étape G1, le dispositif récepteur Rx1_c reçoit du PON WDM le signal optique, représenté ici par sa longueur d'onde λ1, émis par l'émetteur Tx1 d'un terminal optique distant tel que OLT1 par exemple.

Lors d'une étape G2, le signal optique reçu est séparé en deux signaux, λ1_1 et λ1_2, par le séparateur de polarisation Sep_c.

Lors d'une étape G3, le signal λ1_1 est amplifié par l'amplificateur optique Amp_c.

Lors d'une étape G4, le signal λ1_2 est traité par le rotateur de polarisation Rot_c qui renverse à 180° ses axes de polarisation.

Lors d'une étape G5, le signal λ1_1 amplifié passe à son tour dans le rotateur de polarisation Rot_c mais dans l'autre sens.

Lors d'une étape G6, le signal λ1_2, dont la polarisation est maintenant opposée, est amplifié par l'amplificateur optique Amp_c.

Lors d'une étape G7, les signaux λ1_1 et λ1_2, amplifiés et renversés, repassent dans le séparateur Sep_c mais dans l'autre sens, pour être réunis et réémis vers le PON WDM.

Lors d'une étape G8, le signal optique amplifié et renversé est photo-détecté aux bornes de l'amplificateur optique Amp_c, afin de générer le signal électrique ES1.

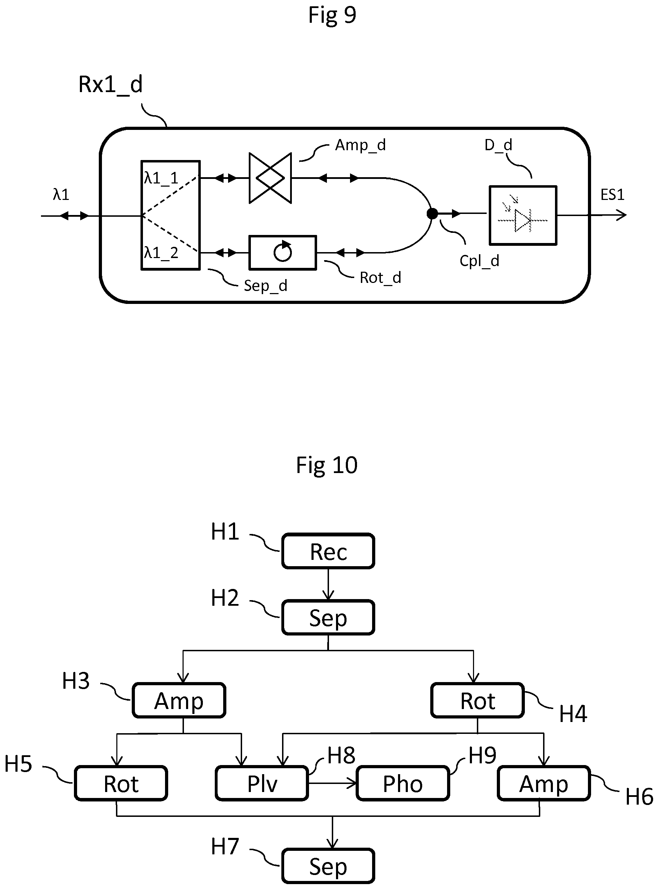

La **figure 9** présente le dispositif récepteur selon un quatrième mode de réalisation de l'invention.

Dans ce mode de réalisation le dispositif Rx1_d comprend un amplificateur optique Amp_d, un séparateur de polarisation Sep_d et un rotateur de polarisation à 180° Rot_d, formant une boucle optique bidirectionnelle. L'amplificateur optique Amp_d peut être réalisé à l'aide d'un SOA. Le SOA peut avantageusement émettre selon un seul axe de polarisation pour plus d'efficacité en termes de puissance optique.

Le dispositif Rx1_d comprend également un coupleur Cpl_d prélevant une partie du signal optique porté par la boucle optique bidirectionnelle. Le signal prélevé est photo-détecté par une diode D_d génératrice du signal électrique ES1 qui peut ensuite être démodulé en un signal de données.

La **figure 10** présente les étapes du procédé de réception d'un signal optique mettant en oeuvre le dispositif récepteur selon le quatrième mode de réalisation de l'invention.

Lors d'une étape H1, le dispositif récepteur Rx1_d reçoit du PON WDM le signal optique, représenté ici par sa longueur d'onde λ1, émis par l'émetteur Tx1 d'un terminal optique distant tel que OLT1 par exemple.

Lors d'une étape H2, le signal optique reçu est séparé en deux signaux, λ1_1 et λ1_2, par le séparateur de polarisation Sep_d.

Lors d'une étape H3, le signal λ1_1 est amplifié par l'amplificateur optique Amp_d.

Lors d'une étape H4, le signal λ1_2 est traité par le rotateur de polarisation Rot_d qui renverse à 180° ses axes de polarisation.

Lors d'une étape H5, le signal λ1_1 amplifié passe à son tour dans le rotateur de polarisation Rot_d mais dans l'autre sens.

Lors d'une étape H6, le signal λ1_2, dont la polarisation est maintenant opposée, est amplifié par l'amplificateur optique Amp_d.

Lors d'une étape H7, les signaux A1_1 et A1_2, amplifiés et renversés, repassent dans le séparateur Sep_d mais dans l'autre sens, pour être réunis et réémis vers le PON WDM.

Lors d'une étape H8, une partie du signal optique amplifié et renversé, porté par la boucle optique bidirectionnelle, est prélevée entre l'amplificateur Amp_d et le rotateur Rot_d par le coupleur optique Cpl_d.

Lors d'une étape H9, le signal optique prélevé est photo-détecté par une diode D_d, afin de générer le signal électrique ES1.

Un dispositif récepteur tel que le dispositif Rx_a, Rx_b, Rx_c, ou Rx_d, dont les descriptions viennent d'être données, peut être intégré dans un module de réception d'un équipement de terminaison de ligne optique (OLT) ou de réseau optique (ONT). Un tel dispositif peut également être mis en oeuvre dans un équipement distinct de l'équipement de terminaison optique, dans un équipement du réseau dédié ou non à la réception de signaux d'un réseau de distribution optique.

Les exemples de réalisation de l'invention qui viennent d'être présentés ne sont que quelques uns des modes de réalisation envisageables. Ils montrent que l'invention permet d'éliminer de l'infrastructure passive d'un PON WDM "self seeded" le dispositif réflecteur nécessaire au fonctionnement de l'auto-accordage en longueur d'onde. Le dispositif réflecteur selon l'invention est déplacé vers l'équipement de terminaison à l'extrémité opposée à la source lumineuse, et présente d'autres avantages permettant de réduire les pertes optiques subies sur le trajet.

## Revendications

1. **Dispositif récepteur** (Rx1_a, Rx1_b, Rx1_c, Rx1_d) pour un système de transmission optique à auto-accordage en longueur d'onde, apte à recevoir un signal optique (λ1) émis par un dispositif émetteur (Tx1) du même système, le dispositif émetteur comprenant une source lumineuse pour émettre le signal optique, le signal optique étant transmis par un réseau optique WDM PON ou point à point, une longueur d'onde du signal optique étant accordée au moyen d'un aller-retour du signal optique entre le dispositif émetteur et un réflecteur optique, le dispositif récepteur étant **caractérisé en ce qu'**il comprend:
• un amplificateur optique (Amp_a, Amp_b, Amp_c, Amp_d) pour amplifier le signal optique reçu du dispositif émetteur au travers du réseau optique WDM ou point à point ;
• un détecteur optique (D_b, D_d) apte à détecter des données dans le signal optique amplifié par ledit amplificateur optique;
• le réflecteur optique (Ref_a, Ref_b) configuré pour renvoyer le signal optique amplifié par ledit amplificateur optique vers le dispositif émetteur au travers du réseau optique WDM ou point à point, pour l'accordage en longueur d'onde du signal optique.

2. **Dispositif récepteur** (Rx1_a, Rx1_c) selon la revendication 1, **caractérisé en ce que** le détecteur optique est intégré à l'amplificateur optique (Amp_a, Amp_c).

3. **Dispositif récepteur** (Rx1_b, Rx1_d) selon la revendication 1, **caractérisé en ce que** le détecteur optique (D_b, D_d) est intégré au réflecteur optique (Ref_b).

4. **Dispositif récepteur** (Rx1_c, Rx1_d) selon la revendication 1, **caractérisé en ce que** le réflecteur optique comprend un séparateur de polarisation (Sep_c, Sep_d) et un rotateur de polarisation à 180° (Rot_c, Rot_d), et **en ce que** le signal optique (λ1) reçu est séparé selon des axes de polarisation pour former un premier signal séparé (λ1_1) et un deuxième signal séparé (λ1_2), le rotateur de polarisation et l'amplificateur optique (Amp_c, Amp_d) étant disposés pour former une boucle avec le séparateur de polarisation, le premier signal séparé circulant dans un sens et le deuxième signal séparé circulant dans l'autre sens, les deux signaux séparés étant réunis dans le séparateur de polarisation pour former un signal optique amplifié renvoyé vers le dispositif émetteur.

5. **Dispositif récepteur** (Rx1_d) selon la revendication 4, **caractérisé en ce que** la boucle comprend un coupleur disposé entre l'amplificateur (Amp_d) et le rotateur (Rot_d) afin de prélever une partie de la lumière pour la diriger vers le détecteur optique (D_d).

6. **Terminal optique** comprenant un dispositif récepteur selon la revendication 1 et un dispositif émetteur comprenant une source lumineuse pour émettre un signal optique.

7. **Système de transmission optique** comprenant un dispositif émetteur comprenant une source lumineuse pour émettre un signal optique, un réseau optique WDM PON ou point à point transmettant le signal optique, le système étant **caractérisé en ce qu'**il comprend en outre un dispositif récepteur selon la revendication 1, recevant le signal optique.

8. **Système de transmission optique** comprenant un réseau optique WDM PON ou point à point transmettant un signal optique, le système étant **caractérisé en ce qu'**il comprend en outre un premier terminal optique selon la revendication 6, émettant le signal optique, et un deuxième terminal optique selon la revendication 6, recevant le signal optique.

9. **Procédé de réception** d'un signal optique pour un système de transmission optique à auto-accordage en longueur d'onde, le signal optique étant émis par un dispositif émetteur du système, le dispositif émetteur comprenant une source lumineuse pour émettre le signal optique, un réseau optique WDM PON ou point à point transmettant le signal optique, une longueur d'onde du signal optique étant accordée au moyen d'un aller-retour du signal optique entre le dispositif émetteur et un réflecteur optique, le procédé comprenant les étapes suivantes :
• réception (E1, F1, G1, H1) du signal optique émis par le dispositif émetteur au travers du réseau optique WDM ou point à point ;
• amplification (E2, E5, F2, F5, G3, G6, H3, H6) du signal optique reçu, formant un signal optique amplifié ;
• détection (E4, F4, G8, H9) de données dans le signal optique amplifié ;
• réflexion (E3, F3) du signal optique amplifié vers le dispositif émetteur au travers du réseau optique WDM ou point à point, pour l'accordage en longueur d'onde du signal optique.

## Patentansprüche

1. Empfangsvorrichtung (Rx1_a, Rx1_b, Rx1_c, Rx1_d) für ein optisches Übertragungssystem mit automatischer Wellenlängenabstimmung, die geeignet ist, ein optisches Signal (λ1), das von einer Sendevorrichtung (Tx1) desselben Systems gesandt wird, zu empfangen, wobei die Sendevorrichtung eine Lichtquelle umfasst, um das optische Signal zu senden, wobei das Signal von einem optischen WDM PON- oder einem Punkt-zu-Punkt- optische Netz übertragen wird, wobei eine Wellenlänge des optischen Signals mit Hilfe eines Hin- und Hersendens des optischen Signals zwischen der Sendevorrichtung und einem optischen Reflektor abgestimmt wird, wobei die Empfangsvorrichtung **dadurch gekennzeichnet ist, dass** sie umfasst:
• einen optischen Verstärker (Amp_a, Amp_b, Amp_c, Amp_d), um das von der Sendevorrichtung empfangene optische Signal durch das optische WDM- oder Punkt-zu-Punkt-Netz zu verstärken;
• einen optischen Detektor (D_b, D_d), der geeignet ist, Daten in dem von dem optischen Verstärker verstärkten optischen Signal zu erfassen;
• einen optischen Reflektor (Ref_a, Ref_b), der eingerichtet ist, um das von dem optischen Verstärker verstärkte optische Signal zu der Sendevorrichtung durch das WDM- oder Punkt-zu-Punkt- optische Netz zur Wellenlängenabstimmung des optischen Signals zurückzusenden.

2. Empfangsvorrichtung (Rx1_a, Rx1_c) nach Anspruch 1, **dadurch gekennzeichnet, dass** der optische Detektor in den optischen Verstärker (Amp_a, Amp_c) integriert ist.

3. Empfangsvorrichtung (Rx1_b, Rx1_d) nach Anspruch 1, **dadurch gekennzeichnet, dass** der optische Detektor (D_b, D_d) in den optischen Reflektor (Ref_b) integriert ist.

4. Empfangsvorrichtung (Rx1_c, Rx1_d) nach Anspruch 1, **dadurch gekennzeichnet, dass** der optische Reflektor einen Polarisationsseparator (Sep_c, Sep_d) und einen Polarisationsrotator um 180° (Rot_c, Rot_d) umfasst, und dass das empfangene optische Signal (λ1) entlang der Polarisationsachsen getrennt wird, um ein erstes getrenntes Signal (λ1_1) und ein zweites getrenntes Signal (λ1_2) zu bilden, wobei der Polarisationsrotator und der optische Verstärker (Amp_c, Amp_d) derart angeordnet sind, dass sie eine Schleife mit dem Polarisationsseparator bilden, wobei das erste getrennte Signal in eine Richtung und das zweite getrennte Signal in die andere Richtung zirkuliert, wobei die zwei getrennten Signale in dem Polarisationseparator vereint werden, um ein verstärktes optisches Signal zu bilden, das zu der Sendevorrichtung zurückgeschickt wird.

5. Empfangsvorrichtung (Rx1_d) nach Anspruch 4, **dadurch gekennzeichnet, dass** die Schleife einen Koppler umfasst, der zwischen dem Verstärker (Amp_d) und dem Rotator (Rot_d) angeordnet ist, um einen Teil des Lichts zu entnehmen, um es zu dem optischen Detektor (D_d) zu leiten.

6. Optisches Endgerät, umfassend eine Empfangsvorrichtung nach Anspruch 1 und eine Sendevorrichtung, umfassend eine Lichtquelle, um ein optisches Signal zu senden.

7. Optisches Übertragungssystem, umfassend eine Sendevorrichtung, umfassend eine Lichtquelle, um ein optisches Signal zu senden, ein WDM PON- oder ein Punkt-zu-Punkt- optisches Netz, das das optische Signal überträgt, wobei das System **dadurch gekennzeichnet ist, dass** es ferner eine Empfangsvorrichtung nach Anspruch 1 umfasst, die das optische Signal empfängt.

8. Optisches Übertragungssystem, umfassend ein WDM PON- oder ein Punkt-zu-Punkt- optisches Netz, das ein optisches Signal überträgt, wobei das System **dadurch gekennzeichnet ist, dass** es ferner ein optisches Endgerät nach Anspruch 6, das das optische Signal sendet, und ein zweites optisches Endgerät nach Anspruch 6 umfasst, das das optische Signal empfängt.

9. Verfahren zum Empfang eines optischen Signals für ein optisches Übertragungssystem mit automatischer Wellenlängenabstimmung, wobei das optische Signal von einer Sendevorrichtung des Systems gesandt wird, wobei die Sendevorrichtung eine Lichtquelle umfasst, um das optische Signal zu senden, wobei ein WDM PON- oder ein Punkt-zu-Punkt- optisches Netz das optische Signal überträgt, wobei eine Wellenlänge des optischen Signals mit Hilfe eines Hin- und Hersendens des optischen Signals zwischen der Sendevorrichtung und einem optischen Reflektor abgestimmt wird, wobei das Verfahren die folgenden Schritte umfasst:
• Empfang (E1, F1, G1, H1) des von der Sendevorrichtung gesandten Signals über das WDM- oder Punkt-zu-Punkt- optische Netz;
• Verstärkung (E2, E5, F2, F5, G3, G6, H3, H6) des empfangenen optischen Signals, wobei ein verstärktes optisches Signal gebildet wird;
• Erfassung (E4, F4, G8, H9) von Daten in dem verstärkten optischen Signal;
• Reflexion (E3, F3) des verstärkten optischen Signals zu der Sendevorrichtung über das WDM- oder Punkt-zu-Punkt- optische Netz für die Wellenlängenabstimmung des optischen Signals.

## Claims

1. Receiver device (Rx1_a, Rx1_b, Rx1_c, Rx1_d) for a wavelength self-seeding optical transmission system, designed to receive an optical signal (λ1) emitted by a transmitter device (Tx1) of the same system, the transmitter device comprising a light source for emission of the optical signal, the optical signal being transmitted by a WDM PON or point-to-point optical network, a wavelength of the optical signal being seeded by means of a round trip of the optical signal between the transmitter device and an optical reflector, the receiver device being **characterized in that** it comprises:
• an optical amplifier (Amp_a, Amp_b, Amp_c, Amp_d) for amplifying the optical signal received from the transmitter device through the WDM or point-to-point optical network;
• an optical detector (D_b, D_d) designed to detect data in the optical signal amplified by said optical amplifier; and
• the optical reflector (Ref_a, Ref_b), configured for reflecting the optical signal amplified by said optical amplifier toward the transmitter device through the WDM or point-to-point optical network, for the wavelength seeding of the optical signal.

2. Receiver device (Rx1_a, Rx1_c) according to Claim 1, **characterized in that** the optical detector is integrated into the optical amplifier (Amp_a, Amp_c).

3. Receiver device (Rx1_b, Rx1_d) according to Claim 1, **characterized in that** the optical detector (D_b, D_d) is integrated into the optical reflector (Ref_b).

4. Receiver device (Rx1_c, Rx1_d) according to Claim 1, **characterized in that** the optical reflector comprises a polarization separator (Sep_c, Sep_d) and a polarization rotator by 180° (Rot_c, Rot_d), and **in that** the optical signal (λ1) received is separated along axes of polarization so as to form a first separate signal (λ1_1) and a second separate signal (λ1_2), the polarization rotator and the optical amplifier (Amp_c, Amp_d) being disposed so as to form a loop with the polarization separator, the first separate signal running in one direction and the second separate signal running in the other direction, the two separate signals being re-united in the polarization separator so as to form an amplified optical signal sent back to the transmitter device.

5. Receiver device (Rx1_d) according to Claim 4, **characterized in that** the loop comprises a coupler disposed between the amplifier (Amp_d) and the rotator (Rot_d) in order to extract a part of the light and to direct it toward the optical detector (D_d).

6. Optical terminal comprising a receiver device according to Claim 1 and a transmitter device comprising a light source for the emission of an optical signal.

7. Optical transmission system comprising a transmitter device comprising a light source for the emission of an optical signal, a WDM PON or point-to-point optical network transmitting the optical signal, the system being **characterized in that** it furthermore comprises a receiver device according to Claim 1, receiving the optical signal.

8. Optical transmission system comprising a WDM PON or point-to-point optical network transmitting an optical signal, the system being **characterized in that** it furthermore comprises a first optical terminal according to Claim 6, emitting the optical signal, and a second optical terminal according to Claim 6, receiving the optical signal.

9. Method for receiving an optical signal for a wavelength self-seeding optical transmission system, the optical signal being emitted by a transmitter device of the system, the transmitter device comprising a light source for emission of the optical signal, a WDM PON or point-to-point optical network transmitting the optical signal, a wavelength of the optical signal being seeded by means of a round trip of the optical signal between the transmitter device and an optical reflector, the method comprising the following steps:
• reception (E1, F1, G1, H1) of the optical signal emitted by the transmitter device through the WDM or point-to-point optical network;
• amplification (E2, E5, F2, F5, G3, G6, H3, H6) of the optical signal received, forming an amplified optical signal;
• detection (E4, F4, G8, H9) of data in the amplified optical signal;
• reflection (E3, F3) of the amplified optical signal toward the transmitter device through the WDM or point-to-point optical network, for the wavelength seeding of the optical signal.
